# EUROPEAN PATENT SPECIFICATION

(11) **EP 4 541 739 B1**
(45) Date of publication and mention of the grant of the patent: **10.06.2026**
(21) Application number: 23830122.0
(22) Date of filing: 25.06.2023
(51) Int. Cl.: B65G 47/91, B25J 19/00, B25J 15/06

(54) **END EFFECTOR FOR TORPEDO CAR CAPPING ROBOT AND CAPPING METHOD THEREOF**
ENDEFFEKTOR FÜR EINEN TORPEDOWAGENABDECKROBOTER UND ABDECKVERFAHREN DAFÜR
EFFECTEUR TERMINAL POUR ROBOT DE CAPSULAGE DE VOITURE TORPILLE ET SON PROCÉDÉ DE CAPSULAGE

(30) Priority: 27.06.2022 CN 202210738223
(43) Date of publication of application: 23.04.2025
(73) Proprietor: BAOSHAN IRON & STEEL CO., LTD., Shanghai 201900 (CN)
(72) Inventor: WU, Ruimin, Shanghai 201900 (CN); SHEN, Chen, Shanghai 201900 (CN); HUANG, Tianmao, Shanghai 201900 (CN); YE, Changhong, Shanghai 201900 (CN); DONG, Wei, Shanghai 201900 (CN); SUN, Guowei, Shanghai 201900 (CN); LI, Yabei, Shanghai 201900 (CN); SUN, Huimin, Shanghai 201900 (CN); YANG, Saidan, Shanghai 201900 (CN)
(74) Representative: Maiwald GmbH
(86) International application number: PCT/CN2023/102073
(87) International publication number: WO 2024/001944

(56) References cited:
- WO-A1-2021/003858
- CN-A- 105 252 251
- CN-A- 106 003 096
- CN-A- 106 378 790
- CN-A- 106 514 690
- CN-A- 109 382 843
- CN-A- 110 342 267
- CN-A- 113 134 599
- CN-U- 213 499 269
- US-A1- 2019 263 005
- US-B1- 10 611 037
- GAO HAO ET AL: "Vision Based Polygon Detection System for Industrial Robots under Complex Illumination", 2021 IEEE INTERNATIONAL CONFERENCE ON ROBOTICS AND BIOMIMETICS (ROBIO), IEEE, 27 December 2021 (2021-12-27), pages 1623 - 1629, XP034106794, DOI: 10.1109/ROBIO54168.2021.9739273

## Description

### Technical field

The present invention relates to the technology of an end effector of a robot for capping a tank opening of a torpedo car in the molten iron transportation link of the iron and steel industry, and more specifically, to an end effector for a torpedo car capping robot and a capping method thereof.

### Background

In the iron and steel metallurgical process, molten iron transportation is mainly undertaken by a torpedo car.

At present, in the molten iron transportation link, the torpedo car completes the operation of pouring molten iron and returns to the blast furnace to wait for receiving molten iron, and the process reaches about 5 hours.

Due to the fact that the tank opening of the current torpedo car has no covering device, the hot air in the tank is directly in contact with the ambient atmosphere, causing pollution emissions, and the temperature drop in the tank is serious, causing energy waste for the subsequent molten iron process.

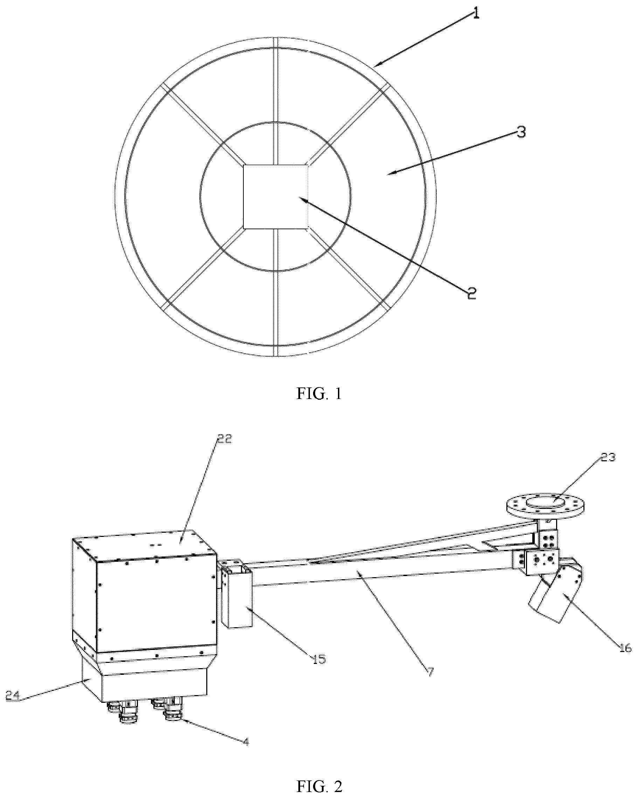

At present, the thermal insulation cover designed for the torpedo car (as shown in FIG. 1) is mostly transported from the ground to the top of the tank opening of the torpedo car by manual use of an electric hoist to perform a capping operation.

Usually, the thermal insulation cover 1 for this type of use is mainly composed of two parts: a main structure 2 and thermal insulation cotton 3. A flat iron plate is set in the middle of the main structure 2, and multiple lifting methods can be provided for the operation. The thermal insulation cotton 3 is a whole-cut circle, usually composed of glass fiber cotton, and the main structure 2 and the insulation cotton 3 are tied by high-temperature resistant iron wire.

Because workers need to stand close to the torpedo car to work, operation scenarios of the extremely high temperature, dust and splashing of molten steel around the torpedo car pose safety risks such as burns. At the same time, there is a large height difference between the operator and the tank opening of the torpedo car, and the status of the tank opening and the status of capping cannot be observed, which is unreliable in terms of safety and efficiency.

In order to complete the capping operation of the torpedo car more efficiently, industrial robots can be used to replace manual operations, and the relevant robot end effectors should also be developed as soon as possible.

The Chinese invention patent application with the application publication date of February 8, 2017 and the application publication number of CN 106378790A discloses a robot suction cup device, including a suction cup assembly, a positioning guide sleeve sleeved in the suction cup assembly, and a suction cup with one end fixed in the suction cup assembly and connected to the positioning guide sleeve; the suction cup assembly includes a gas path joint with a through hole, and a shell sleeved on the positioning guide sleeve; and the gas path joint is threadedly connected to the suction cup joint. This device does not cause radial displacement and deflection during high-speed picking, and has good centering performance; the flexible vacuum suction cup is radially limited, so that the object does not shake during high-speed handling; the elastic buffer of the flexible suction cup is used, and the safety performance is good. However, because the technical solution is designed for high-speed handling and stacking, the suction cup used is made of rubber, which lacks high-temperature protection and cannot meet the application requirements in all scenarios. The device only has a single suction cup, and the weight of the object being picked up is limited. From a structural analysis, after the suction cup device is installed on the end flange of the robot, additional longitudinal-depth movement range expansion is not provided, and only handling near the range of the robot body can be achieved.

The Chinese invention patent with the authorization announcement date of February 15, 2019 and the authorization announcement number CN106514690B discloses "a robot tooling", including a clamp support used for providing a tooling installation connector, and further including a driving system and three grabbing handles arranged around the cylindrical center line; the driving system is installed on the clamp support, is connected with the three grabbing handles, and drives the three grabbing handles to do folding or unfolding motion so as to achieve grabbing or releasing of workpieces; and the driving system drives the three grabbing handles to move in radial direction around the center line on a plane vertical to the center line so that the three grabbing handles can be folded or unfolded to grab or release the workpieces, the grabbing faces of the grabbing handles are in fit with the surfaces of the workpieces, and contact between the grabbing handles and the workpieces is surface shape contact when the workpieces are grabbed. When the robot tooling grabs the workpieces, the grabbing faces and the workpiece surfaces are in surface shape contact, and therefore the reliability in the grabbing process is better improved. However, because the designed handling object is the compressor in the air conditioner, and the designed clamping claw structure is only applicable to a cube of a certain volume, for the operation object at which the present invention is targeted (a capping operation of the torpedo car), the operation task cannot be completed.

At the same time, in the technical solutions of the above two patents, no relevant sensors or devices are set to locate and detect the picked up objects.

Further examples of prior art may be found in patent documents CN 105 252 251 A, CN 109 382 843 A, CN 106 003 096 A and US 2019/263005 A1.

### Summary

An objective of the present invention is to provide an end effector for a torpedo car capping robot and a capping method thereof, which can automatically guide the robot to accurately pick up a thermal insulation cover, locate the position of a tank opening of the torpedo car, and then guide the robot to accurately perform a capping operation for the tank opening of the torpedo car again.

The technical solution of the present invention is to provide an end effector for a torpedo car capping robot, and the end effector includes:
1) a picking and releasing unit, configured to pick up and release a thermal insulation cover; including: a suction cup for picking up and releasing the thermal insulation cover, and a retractable air pipe for providing compressed gas and a guide rod for fixing the retractable air pipe; where the retractable air pipe is fitted into the guide rod, so that the retractable air pipe can only move in an axial direction of the guide rod;
2) a buffer unit, configured to connect the suction cup with a component mounting plate on the end effector; including: a buffer support rod that can make a compression stroke between the suction cup and the component mounting plate and a buffer support rod bushing that increases a contact stroke between the buffer support rod and the component mounting plate; where an L stopper is fixed above the buffer support rod bushing; the buffer support rod is distributed in four holes on the component mounting plate, and the four holes are arranged in a square or rectangular shape; the diameter of the four holes on the component mounting plate is slightly larger than the diameter of the buffer support rod; and a detection device is arranged on the component mounting plate;
3) a thermal insulation cover distance detection unit, configured to detect a relative distance between the thermal insulation cover and the component mounting plate; including: a laser rangefinder for performing detection; where the component mounting plate has a rectangular hole in a distance monitoring area of the laser rangefinder, so that the detection beam of the laser rangefinder can be directed directly below the component mounting plate;
4) an end effector structure protection unit, configured to detect the compression amount of the buffer support rod; including: a photoelectric sensor for performing detection; a group of photoelectric sensors includes two, and the two photoelectric sensors are fixedly installed between the fixing bracket and the component mounting plate; the two photoelectric sensors included in a single group are arranged up and down, and are fixedly installed in an axial direction of the end effector;
5) a pneumatic actuator unit, configured to control a flow direction of the compressed gas inside the suction cup; including: a two-position three-way solenoid valve and double-head two-group connectors for performing air path control; where an air inlet of the two-position three-way solenoid valve is connected to the compressed gas, and two air outlets are respectively connected to the double-head two-group connectors, one of the double-head two-group connectors is connected to magnetic force generating ports of the four suction cups, and the other double-head two-group connector is connected to magnetic force eliminating ports of the four suction cups, so as to achieve the purpose of controlling the suction cups through the two-position three-way solenoid valve;
6) an end effector protective cover shell unit, configured to provide closed protection for the components set inside the end effector; including: an angle steel frame for reinforcing a frame structure and a sealing plate for enclosing components at the front end of the end effector, and a suction cup protective cover shell to prevent direct collision with the suction cup during movement;
7) a heat dissipation unit, configured to block high-temperature exhaust gas and dust to be outside the end effector; including: a gas distribution block for performing gas distribution and a retractable and bendable air pipe nozzle; where the connected air path is distributed by the gas distribution block and then connected to the air pipe nozzle respectively, and the high-temperature exhaust gas and dust in the working environment are blocked to be outside the end effector by the compressed gas released by the air pipe nozzle.

Further, the end effector further includes a thermal insulation cover/tank opening visual system, which is used to identify a center position of the thermal insulation cover/tank opening to be picked up at the pick-up position, and feed back to the robot system; including: a thermal insulation cover visual camera and/or a tank opening visual camera.

Specifically, the suction cup can be a permanent magnetic pneumatic suction cup or an electromagnetic suction cup.

Preferably, the buffer support rod and the suction cup are connected and fixed by a ball hinge, so that when the thermal insulation cover is tilted, the suction cup is given a twisting amount, so as to better complete the picking operation.

Specifically, the buffer support rod bushing is fixedly installed between the component mounting plate and the buffer support rod; and the function is as follows: without increasing the thickness of the component mounting plate, the buffer support rod is fitted into the buffer support rod bushing fixed in the hole of the component mounting plate, so that the contact area between the buffer support rod and the component mounting plate is increased, the shaking of the buffer support rod caused by external force during operation can be reduced, and the weight of the end effector is minimized.

Specifically, in the end effector structure protection unit, the detection device fixed on the component mounting plate is a photoelectric sensor.

Further, the suction cup protective cover shell in the end effector protective cover shell unit has a lower end whose horizontal plane is higher than the horizontal plane of the bottom surface of the suction cup at the extreme pressing position.

The technical solution of the present invention further provides a capping method of the end effector for a torpedo car capping robot, at least including the following steps:
1) After the end effector moves to the top of the thermal insulation cover, the center of the thermal insulation cover at the current pick-up position is identified by the thermal insulation cover visual system and fed back to the robot system, and then the picking center of the end effector moves to be directly above the center of the thermal insulation cover;
2) The robot system is driven by using the value fed back by the thermal insulation cover distance detection unit to descend with the end effector and pick up the thermal insulation cover. **In** this process, if a measurement deviation of the value fed back by the thermal insulation cover distance detection unit occurs and causes the descent stroke to be too large, thereby endangering the mechanical structure of the end effector, the end effector structure protection unit monitors the compression amount of the buffer unit at all times, and when the compression amount reaches the critical compression amount, information is sent out and the robot system is driven to stop descending and lift upwards;
3) When the end effector moves to the top of the tank opening of the torpedo car, the tank opening visual system identifies a current position of the tank opening of the torpedo car, and feeds back data to the robot system, and after the robot system is guided to move to the top of the tank opening of the torpedo car, the capping operation is completed by releasing the thermal insulation cover.

Furthermore, the capping method specifically includes the following steps:
1) After the end effector moves to the top of the thermal insulation cover, the thermal insulation cover visual camera is activated, and takes a photo of the thermal insulation cover and identifies to find a center position; thereafter, the thermal insulation cover visual camera feeds back coordinates of the center position of the thermal insulation cover to the robot system;
2) After the robot system moves the end effector to be directly above the thermal insulation cover, the suction cup executes a magnetization instruction; the laser rangefinder in the end effector starts to measure a distance between the current end effector and the thermal insulation cover to be picked up; thereafter, the end effector executes a descending instruction according to the feedback value;

During this process, if an error occurs in the feedback value, resulting in an excessive descent stroke, the buffer support rod installed on the suction cup starts to compress, and when the compression amount reaches a preset value, the L-shaped stopper installed on the upper end of the buffer support rod bushing triggers the photoelectric sensor signal, a stop-descending instruction is fed back to the robot system, and the picking operation of the thermal insulation cover is completed by default, and the thermal insulation cover is lifted to the process position height;
In this case, the laser rangefinder measures again; because the value fed back by the laser rangefinder remains constant after the picking is successful, the value is used to determine whether the end effector has completed the picking operation of the thermal insulation cover;
   3) The end effector that picks up the thermal insulation cover is moved to the process position above the tank opening of the torpedo car; then, the tank opening visual camera takes a photo of the tank opening of the torpedo car and identifies to find a center position; then, the tank opening visual camera feeds back coordinates of the center position of the tank opening of the torpedo car to the robot system; after the robot system moves the end effector to the capping process position above the tank opening of the torpedo car, the suction cup executes a demagnetization instruction, so that the thermal insulation cover is released above the tank opening of the torpedo car, thereby completing the capping operation;
   4) During the entire operation, the air pipe nozzle connected to the heat dissipation unit releases the compressed gas into the end effector, so that the external high-temperature exhaust gas and dust cannot enter the end effector through the holes or gaps, thereby protecting the components.

Compared with the prior art, the advantages of the present invention are as follows:
1. The technical solution of the present invention can automatically complete the precise picking of the thermal insulation cover, efficiently transport and accurately complete the capping operation for the tank opening of the torpedo car, and can improve the efficiency of performing capping for the torpedo car and reduce the danger of manual operation;
2. Due to the adoption of the automatic positioning mode, the robot can be automatically guided to accurately pick up the thermal insulation cover, and after locating the position of the tank opening of the torpedo car, the robot is guided again to accurately perform the capping operation for the tank opening of the torpedo car, so that the precise locating and smooth progress of the entire operation process are ensured, and the safety of the operating equipment and the object being operated during the entire operation process are also ensured;
3. The end effector of the robot system of the present invention is used, so that the capping operation can be efficiently performed for the tank opening of the torpedo car in a high-quality manner, the efficiency of capping is sped up and safety and reliability are improved while the manual operation is replaced, and the end effector of the robot system can be beneficially used in the metallurgical industry.

### Brief description of drawings

FIG. 1 is a schematic structural diagram of a thermal insulation cover;
FIG. 2 is an overall schematic diagram of an end effector according to the present invention;
FIG. 3 is a schematic diagram of an internal structure of an end effector according to the present invention;
FIG. 4 is a schematic diagram of performing a picking operation for a thermal insulation cover according to the present invention;
FIG. 5 is a schematic diagram describing that a thermal insulation cover has been picked up according to the present invention;
FIG. 6 is a schematic diagram of an internal buffer unit after compression according to the present invention; and
FIG. 7 is a schematic diagram of a capping operation according to the present invention.

### Detailed description of embodiments

The present invention is further described below with reference to the accompanying drawings.

The present invention provides an end effector for a torpedo car capping robot, which is used to perform an operation for a thermal insulation cover of a tank opening of a torpedo car.

As shown in FIG. 1, a thermal insulation cover 1 includes: a picking structure 2 and thermal insulation cotton 3.

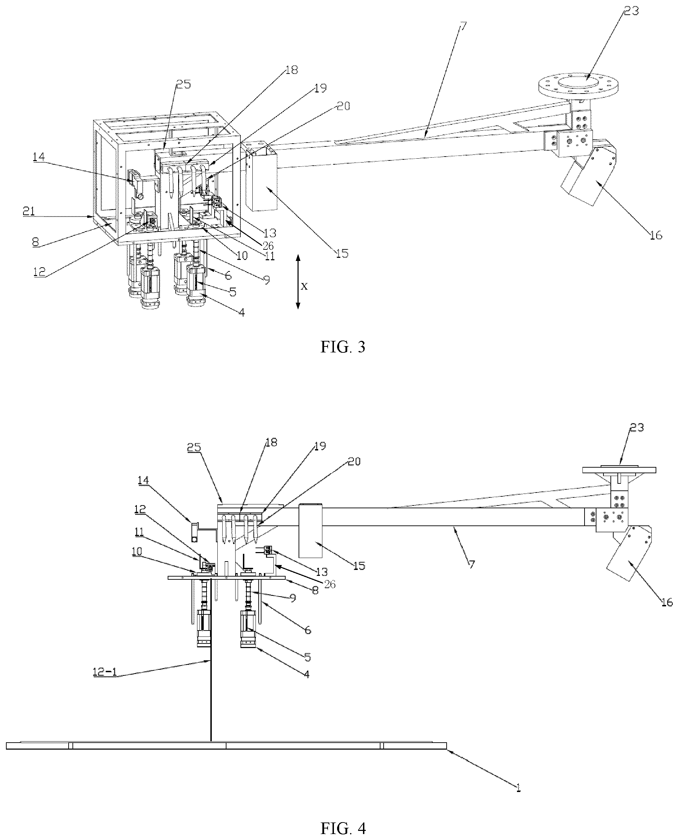

Referring to FIGS. 2 and 3, an end effector 7 provided by the present invention is connected to the end of the robot by means of a flange mounting surface 23, and the components in the end effector 7 communicate with the robot system through an IO-LINK controller 25.

With reference to FIGS. 2 and 3, the end effector 7 provided by the present invention includes:
1) A picking and releasing execution unit is configured to pick up and release the thermal insulation cover 1.

The picking and releasing execution unit includes: a permanent magnetic pneumatic suction cup 4 for picking up and releasing the thermal insulation cover 1, and a retractable air pipe (not shown) for providing compressed gas and a guide rod 6 for fixing the retractable air pipe. The retractable air pipe and the guide rod 6 both extend in the X direction shown in FIG. 3. The compressed gas passes through the retractable air pipe and then enters the inside of the end effector 7, so that the high-temperature exhaust gas and dust outside cannot pass into the inside of the end effector 7, which plays a role in protecting components.

At the same time, the retractable air pipe is fitted into the guide rod 6, so that the retractable air pipe can only move in the axial direction of the guide rod 6 (that is, the X direction shown in FIG. 3). An electromagnetic sensor 5 is installed on the permanent magnetic pneumatic suction cup 4, and can monitor the working state of the permanent magnetic pneumatic suction cup 4 in real time. The type of suction cup used to pick up and release the thermal insulation cover 1 is not limited in the present application, provided that the suction cup can pick up and release the thermal insulation cover 1, such as the permanent magnetic pneumatic suction cup 4 shown in this embodiment, or an electromagnetic suction cup.

Preferably, the retractable air pipe is made of high temperature resistant material.

It should be noted that the number of permanent magnetic pneumatic suction cups 4 is not limited in present application, for example, may be four shown in this embodiment of the present application, or may be three.

2) A buffer unit is configured to connect the permanent magnetic pneumatic suction cup 4 and a component mounting plate 8 on the end effector 7.

The buffer unit includes: a buffer support rod 9 that can make the permanent magnetic pneumatic suction cup 4 and the component mounting plate 8 have a compression stroke, and an L-shaped stopper 11 is fixed above the buffer support rod 9.

For example, the buffer support rods 9 are distributed in four holes on the component mounting plate 8, and the four holes are arranged in a square or rectangular shape. The buffer support rod 9 and the permanent magnetic pneumatic suction cup 4 are connected and fixed by a ball hinge. In this way, when the thermal insulation cover 1 is tilted, the permanent magnetic pneumatic suction cup 4 is given a twisting amount, so as to better complete the picking operation.

The buffer unit further includes: a buffer support rod bushing 10 for increasing a contact stroke between the buffer support rod 9 and the component mounting plate 8. The buffer support rod bushing 10 is fixedly installed between the component mounting plate 8 and the buffer support rod 9. Without increasing the thickness of the component mounting plate 8, the buffer support rod 9 is fitted into the buffer support rod bushing 10 fixed in the hole of the component mounting plate 8, so that the contact area between the buffer support rod 9 and the component mounting plate 8 is increased, the shaking of the buffer support rod 9 caused by external force during operation is reduced, and the weight of the end effector 7 is minimized.

Exemplarily, the diameter of the four holes on the component mounting plate 8 is slightly larger than the diameter of the buffer support rod 9. For example, the diameter of the buffer support rod 9 is set to 20 mm, and the diameter of the hole can be set to 24 mm, but limitation is not set thereto. The buffer support rod bushing 10 can be set to a step shape, extending along the X direction shown in FIG. 3 and passing through the hole. In order to fix the buffer support rod bushing 10 in the hole, the diameter of the buffer support rod bushing 10 above the hole is larger than the diameter of the hole, and the diameter of the buffer support rod bushing 10 below the hole is smaller than the diameter of the hole, and the buffer support rod bushing 10 below the hole is connected to the buffer support rod 9.

It should be noted that the number of holes on the component mounting plate 8 is not limited in the present application, provided that the number of holes on the component mounting plate 8 is consistent with the number of permanent magnetic pneumatic suction cups 4, for example, may be four shown in this embodiment of the present application, or may be three.

3) A thermal insulation cover distance detection unit is configured to detect a relative distance between the thermal insulation cover 1 and the component mounting plate 8 (for example, the distance shown in 12-1 in FIG. 4).

The thermal insulation cover distance detection unit includes: a laser rangefinder 12 for performing detection.

The laser rangefinder 12 is fixedly installed between a fixing bracket 26 and the component mounting plate 8.

The component mounting plate 8 has a rectangular hole in a distance monitoring area of the laser rangefinder 12, so that the detection beam of the laser rangefinder 12 can be directed directly below the component mounting plate 8.

4) An end effector structure protection unit is configured to detect a current compression amount of the buffer support rod 9.

The end effector structure protection unit includes: a photoelectric sensor 13 for performing detection.

Two photoelectric sensors 13 are assembled in a group, and are fixedly installed between a fixing bracket 26 and the component mounting plate 8. The fixing bracket 26 is in an inverted C shape, so that a certain distance between the photoelectric sensor 13 and the component mounting plate 8 can be kept.

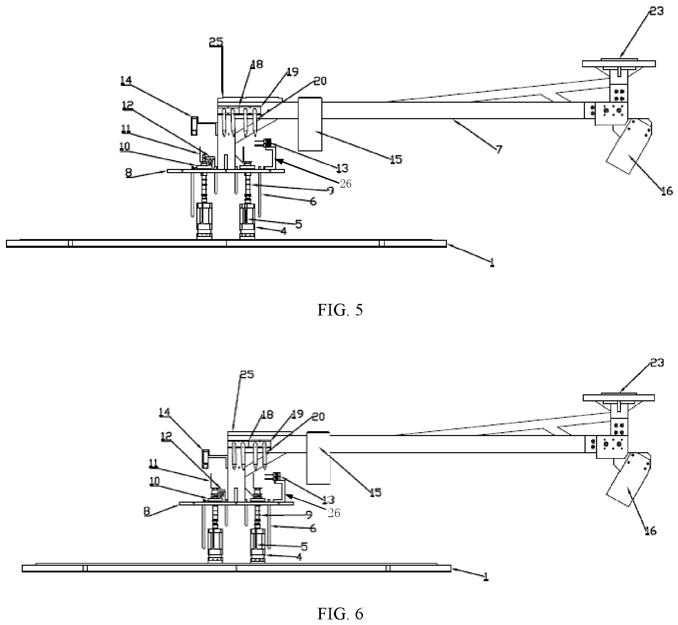

Two photoelectric sensors in a single group are arranged up and down, and are installed and fixed in an axial direction of the end effector 7 (that is, the X direction shown in FIG. 3). When the L-shaped stopper 11 moves up to trigger the photoelectric sensor 13 located below, the robot gets feedback indicating that a descent stroke is too large at this time. When the L-shaped stopper 11 continues to move up to trigger the photoelectric sensor 13 located above, the robot forces to stop descending (refer to FIG. 5), so as to better protect the main structure of the end effector 7.

5) A pneumatic actuator is configured to control a flow direction of compressed gas inside the permanent magnetic pneumatic suction cup 4.

The pneumatic actuator includes: a two-position three-way solenoid valve 14 for performing gas path control and double-head two-group connectors.

An air inlet of the two-position three-way solenoid valve 14 is connected to the compressed gas, and two air outlets are respectively connected to double-head two-group connectors (not shown in the figure), one of the double-head two-group connectors is connected to magnetic force generating ports of the four permanent magnetic pneumatic suction cups 4, and the other double-head two-group connector is connected to magnetic force eliminating ports of the four permanent magnetic pneumatic suction cups 4, so as to achieve the purpose of controlling the permanent magnetic pneumatic suction cup 4 through the two-position three-way solenoid valve 14.

When the permanent magnetic pneumatic suction cup 4 needs to execute a magnetization instruction, the two-position three-way solenoid valve 14 supplies the compressed gas connected to the air inlet to the double-head two-group connector connected to the magnetic force generating ports of the four permanent magnetic pneumatic suction cups 4, so that the permanent magnetic pneumatic suction 4 is magnetized. When the permanent magnetic pneumatic suction cup 4 needs to execute a demagnetization instruction, the two-position three-way solenoid valve 14 supplies the compressed gas connected to the air inlet to the double-head two-group connector connected to the magnetic force eliminating ports of the four permanent magnetic pneumatic suction cups 4, so that the permanent magnetic pneumatic suction cup 4 is demagnetized.

6) An end effector protective cover shell unit is configured to provide closed protection for components set inside the end effector 7.

The end effector protective cover shell unit includes: an angle steel frame 21 for reinforcing a frame structure and a sealing plate 22 for enclosing the components at the front end of the end effector 7, and a suction cup protective cover shell 24 for preventing direct collision with the permanent magnetic pneumatic suction cup 4 during movement. The horizontal plane of the lower end of the suction cup protective cover shell 24 is higher than the horizontal plane of the bottom surface of the permanent magnetic pneumatic suction cup 4 at the extreme pressing position. With this design, when the permanent magnetic pneumatic suction cup 4 is at the extreme pressing position, the horizontal plane of the lower end of the suction cup protective cover shell 24 is higher than the position of the permanent magnetic pneumatic suction cup 4 at this time, so that the thermal insulation cover 1 sucked by the permanent magnetic pneumatic suction cup 4 at this time is located below the suction cup protective cover shell 24, effectively preventing the deformation of the thermal insulation cover 1.

7) A heat dissipation unit is configured to block high-temperature exhaust gas in the working environment to be outside the end effector 7.

The heat dissipation unit includes: a gas distribution block 19 for distributing the air path and an air pipe nozzle 20 for performing an air blowing operation.

The total air path is divided into two after entering the end effector 7, one of which is supplied to the pneumatic actuator unit for the two-position three-way solenoid valve 14 to control the permanent magnetic pneumatic suction cup 4, and the other is supplied to the heat dissipation unit for blocking the high-temperature exhaust gas in the working environment to be outside the end effector 7.

The connected air path is dispersed by the gas distribution block 19 and then connected to the air pipe nozzles 20 respectively. Relying on the compressed gas released by the air pipe nozzle 20, the high-temperature exhaust gas and dust in the working environment are blocked to be outside the end effector 7. At the same time, the air pipe nozzle 20 is made of flexible material and can be bent and stretched, so as to facilitate the blowing of high-pressure gas to every corner of the end effector 7.

It should be noted that the number of air pipe nozzles 20 is not limited in the present application, for example, may be four shown in this embodiment, or may be three.

The end effector 7 further includes a thermal insulation cover/tank opening visual system for identifying a center position of the thermal insulation cover/tank opening at the current pick-up position and feeding back to the robot system; and includes: a thermal insulation cover visual camera 15 and/or a tank opening visual camera 16.

In practical application, in order to simplify the system structure and spare parts types, the thermal insulation cover visual camera 15 and the tank opening visual camera 16 can use the same type of visual camera. If corresponding definitions and distinctions are made in the control program, the thermal insulation cover visual camera 15 and the tank opening visual camera 16 can also use the same visual camera to achieve the function reuse of "one machine, two uses" of the visual camera.

The present invention further provides a capping method of the end effector for a torpedo car capping robot. The method is described in detail with reference to FIGS. 4 to 7, including the following steps:
1) The end effector 7 is moved to the process position above the thermal insulation cover 1 (referred to as the process position, the same below), the thermal insulation cover visual camera 15 installed on the end effector 7 takes a photo of the thermal insulation cover 1 and identifies to find a center position, and feeds back coordinates to the robot system, and the robot carries the end effector 7 to move to be directly above the thermal insulation cover 1; that is, the center point of the rectangle or square where the four permanent magnetic pneumatic suction cups 4 installed on the component mounting plate 8 are distributed coincides with the center point of the thermal insulation cover 1 in the vertical direction (that is, the X direction shown in FIG. 3).
2) Referring to FIGS. 4 and 5, the two-position three-way solenoid valve 14 switches the air path supply to a magnetic force generation channel; that is, at this time, the four permanent magnetic pneumatic suction cups 4 generate magnetic force; thereafter, the laser rangefinder 12 measures the current relative distance between the end effector 7 and the thermal insulation cover 1 (refer to the number 12-1 shown in FIG. 4), and this distance is converted into the relative distance between the adsorption surface of the permanent magnetic pneumatic suction cup 4 and the thermal insulation cover 1; the end effector 7 descends by the measured distance and completes the operation of picking up the thermal insulation cover 1.

In this process, referring to FIG. 6, if there is a deviation in the measurement value of the laser rangefinder 12, leading to an excessive descent stroke, the buffer support rod 9 fixed to the permanent magnetic pneumatic suction cup 4 moves upward. When the error value is large and the upward movement of the buffer support rod 9 increases, the L-shaped stopper 11 fixed on the buffer support rod bushing 10 also moves with the buffer support rod 9 during this process. When the upward movement of the L-shaped stopper 11 triggers the photoelectric sensor 13, the robot receives signal feedback and stops the descent of the end effector 7 to protect the main structure of the end effector 7.

3) After completing the picking operation, the end effector 7 returns to the process position. At this time, the laser rangefinder 12 measures again. When the end effector 7 is in the state of picking up the thermal insulation cover 1, the measured value of the laser rangefinder 12 should be a fixed value. When the numerical feedback result is equal to the fixed value, it is determined that the picking operation of the thermal insulation cover 1 has been completed currently. When the numerical feedback result is much greater than the fixed value, it is determined that the thermal insulation cover 1 is lost or the picking operation has failed currently.

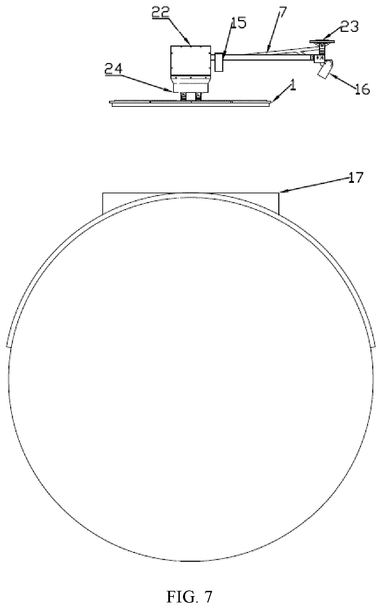

4) Referring to FIG. 7 and with reference to FIG. 6, after the end effector 7 moves to the top of a tank opening 17 of the torpedo car, the compressed gas of the total gas path is supplied to a gas distribution block 19, and then blown out through an air pipe nozzle 20 in a blowing device 18. The blown compressed gas can block the high-temperature exhaust gas emitted from the top of the tank opening 17 of the torpedo car to be outside the end effector 7. A tank opening visual camera 16 takes a photo of the tank opening 17 of the torpedo car and identifies to find a center position, and feeds back coordinates to the robot system, and then the end effector 7 moves to be directly above the tank opening 17 of the torpedo car, that is, at this time, the center of the thermal insulation cover 1 is facing the center of the tank opening 17 of the torpedo car, so that it can ensure that the thermal insulation cover 1 does not deviate or capping is not failed, and the two-position three-way solenoid valve 14 switches the gas path supply to the magnetic force disappearance channel; that is, at this time, the four permanent magnetic pneumatic suction cups 4 lose the magnetic force, and the thermal insulation cover 1 is immediately dropped onto the tank opening 17 of the torpedo car, and the capping operation is completed.

In summary, in the capping device and the capping method of the present invention, the steps of manually lifting the thermal insulation cover from the ground and then performing capping for the torpedo car are replaced, and while using the automated capping device of the present invention to replace the steps, the sampling efficiency and safety reliability are accelerated. Therefore, the capping device and capping method can be used beneficially in the iron-making industry.

In addition, in the technical solution of the present invention, a thermal insulation cover distance detection unit is provided on the end effector, the position and distance of the thermal insulation cover can be measured in real time and accurately, to find the center position of the thermal insulation cover and feedback the coordinates, thereby ensuring the safety of the operating equipment and the object being operated during the entire operation. The present invention can be widely used in the design and manufacturing field of molten iron transportation operation devices in the iron and steel industry.

Ordinary technicians in this technical field should realize that the above embodiments are only used to illustrate the present invention, and are not used as a limitation of the present invention.

## Claims

1. An end effector (7) for a torpedo car capping robot, wherein the end effector comprises:
1) a picking and releasing unit, configured to pick up and release a thermal insulation cover; comprising: a suction cup (4) for picking up and releasing the thermal insulation cover, and a retractable air pipe for providing compressed gas and a guide rod (6) for fixing the retractable air pipe; wherein the retractable air pipe is fitted into the guide rod, so that the retractable air pipe can only move in an axial direction of the guide rod;
2) a buffer unit, configured to connect the suction cup with a component mounting plate (8) on the end effector; comprising: a buffer support rod (9) that can make a compression stroke between the suction cup and the component mounting plate and a buffer support rod bushing (10) that increases a contact stroke between the buffer support rod and the component mounting plate; wherein an L-shaped stopper (11) is fixed above the buffer support rod bushing; the buffer support rod is distributed in four holes on the component mounting plate, and the four holes are arranged in a square or rectangular shape; the diameter of the four holes on the component mounting plate is slightly larger than the diameter of the buffer support rod; and a detection device is arranged on the component mounting plate;
3) a thermal insulation cover distance detection unit (12), configured to detect a relative distance between the thermal insulation cover and the component mounting plate; comprising: a laser rangefinder (12) for performing detection; wherein the component mounting plate has a rectangular hole in a distance monitoring area of the laser rangefinder, so that a detection beam of the laser rangefinder can be directed directly below the component mounting plate;
4) an end effector structure protection unit, configured to detect a compression amount of the buffer support rod; comprising: a photoelectric sensor for performing detection; wherein a group of photoelectric sensors comprises two, and the two photoelectric sensors are fixedly installed between a fixing bracket and the component mounting plate; the two photoelectric sensors in a single group are arranged up and down, and are fixedly installed toward an axis direction of the end effector;
5) a pneumatic actuator unit, configured to control a flow direction of the compressed gas inside the suction cup; comprising: a two-position three-way solenoid valve (14) and double-head two-group connectors for performing air path control; wherein an air inlet of the two-position three-way solenoid valve is connected to the compressed gas, and the two air outlets are respectively connected to the double-head two-group connectors, one of the double-head two-group connectors is connected to magnetic force generating ports of the four suction cups, and the other double-head two-group connector is connected to magnetic force eliminating ports of the four suction cups, so as to achieve the purpose of controlling the suction cups through the two-position three-way solenoid valve;
6) an end effector protective cover shell unit, configured to provide closed protection for components set inside the end effector; comprising: an angle steel frame (21) for reinforcing the frame structure and a sealing plate (22) for enclosing the components at the front end of the end effector, and a suction cup protective cover shell (24) to prevent direct collision with the suction cup during movement; and
7) a heat dissipation unit, configured to block high-temperature exhaust gas and dust to be outside the end effector; comprising: a gas distribution block for performing gas distribution and a retractable and bendable air pipe nozzle, wherein the connected air path is dispersed through the gas distribution block (19) and then connected to the air pipe nozzle respectively, the compressed gas released by the air pipe nozzle (20) blocks the high-temperature exhaust gas and dust in the working environment to be outside the end effector.

2. The end effector for a torpedo car capping robot according to claim 1, wherein the end effector further comprises a thermal insulation cover/tank opening visual system used for identifying a center position of the thermal insulation cover/tank opening at the pick-up position, and feeding back the center position to the robot system; comprising: a thermal insulation cover visual camera and/or a tank opening visual camera.

3. The end effector for a torpedo car capping robot according to claim 1, wherein the suction cup is a permanent magnetic pneumatic suction cup or an electromagnetic suction cup.

4. The end effector for a torpedo car capping robot according to claim 1, wherein the buffer support rod and the suction cup are connected and fixed by a ball joint.

5. The end effector for a torpedo car capping robot according to claim 1, wherein the buffer support rod bushing is fixedly installed between the component mounting plate and the buffer support rod.

6. The end effector for a torpedo car capping robot according to claim 1, wherein, in the end effector structure protection unit, the detection device fixed on the component mounting plate is a photoelectric sensor.

7. The end effector for a torpedo car capping robot according to claim 1, wherein the suction cup protective cover shell in the end effector protective cover shell unit has a lower end whose horizontal plane is higher than the horizontal plane of the bottom surface of the suction cup in the extreme pressing position.

8. A capping method of the end effector for a torpedo car capping robot according to any one of claims 1-7, comprising at least the following steps:
1) after the end effector moves to the top of the thermal insulation cover, identifying, by the thermal insulation cover visual system, the center of the thermal insulation cover at the current pick-up position, and feeding back to the robot system, and moving the pickup center of the end effector to be directly above the center of the thermal insulation cover;
2) driving the robot system by using the value fed back by the thermal insulation cover distance detection unit to descend with the end effector and pick up the thermal insulation cover, and in this process, if a measurement deviation of the value fed back by the thermal insulation cover distance detection unit occurs and causes the descent stroke to be too large, thereby endangering the mechanical structure of the end effector, monitoring, by the end effector structure protection unit, a compression amount of the buffer unit at all times, and when the compression amount reaches the critical compression amount, sending out information and driving the robot system to stop descending and lift upwards; and
3) when the end effector moves to the top of the tank opening of the torpedo car, identifying, by the tank opening visual system, a current position of the tank opening of the torpedo car, and feeding back data to the robot system, and after guiding the robot system to move to the top of the tank opening of the torpedo car, completing a capping operation by releasing the thermal insulation cover.

9. The capping method of the end effector for a torpedo car capping robot according to claim 8, wherein the capping method specifically comprises the following steps:
1) after the end effector moves to the top of the thermal insulation cover, activating the thermal insulation cover visual camera, and taking a photo of the thermal insulation cover and identifying to find a center position; thereafter, feeding back, by the thermal insulation cover visual camera, coordinates of the center position of the thermal insulation cover to the robot system;
2) after the robot system moves the end effector to be directly above the thermal insulation cover, executing, by the suction cup, a magnetization instruction; starting to measure, by the laser rangefinder in the end effector, a current distance between the end effector and the thermal insulation cover to be picked up; thereafter, executing, the end effector, a descending instruction according to the feedback value; wherein
during this process, if an error occurs in the feedback value, resulting in an excessive descent stroke, the buffer support rod installed on the suction cup starts to compress; when the compression amount reaches a preset value, the L-shaped stopper installed on the upper end of the buffer support rod bushing triggers the photoelectric sensor signal, and a stop-descending instruction is fed back to the robot system; the picking operation of the thermal insulation cover is completed by default, and the thermal insulation cover is lifted to the process position height;
in this case, the laser rangefinder measures again; because the value fed back by the laser rangefinder remains constant after the picking is successful, the value is used to determine whether the end effector has completed the picking operation of the thermal insulation cover;
3) moving the end effector that picks up the thermal insulation cover to the process position above the tank opening of the torpedo car; then, taking, by the tank opening visual camera, a photo of the tank opening of the torpedo car and identifying to find a center position; then, feeding back, by the tank opening visual camera, coordinates of the center position of the tank opening of the torpedo car to the robot system; after the robot system moves the end effector to the capping process position above the tank opening of the torpedo car, executing, by the suction cup, a demagnetization instruction, so that the thermal insulation cover is released above the tank opening of the torpedo car, thereby completing the capping operation;
4) during the entire operation process, releasing, by the air pipe nozzle connected to the heat dissipation unit, the compressed gas into the end effector, so that the external high-temperature exhaust gas and dust cannot enter the end effector through the holes or gaps, thereby protecting the components.

## Patentansprüche

1. Endeffektor (7) für einen Torpedowagenabdeckroboter, wobei der Endeffektor Folgendes umfasst:
1) eine Aufnahme- und Freigabeeinheit, die dazu konfiguriert ist, eine Wärmeisolierungsabdeckung aufzunehmen und freizugeben; umfassend:
eine Saugglocke (4) zum Aufnehmen und Freigeben der Wärmeisolierungsabdeckung und ein einziehbares Luftrohr zum Bereitstellen von komprimiertem Gas und eine Führungsstange (6) zum Befestigen des einziehbaren Luftrohrs; wobei das einziehbare Luftrohr in die Führungsstange eingesetzt wird, sodass das einziehbare Luftrohr sich nur in einer Axialrichtung der Führungsstange bewegen kann;
2) eine Puffereinheit, die dazu konfiguriert ist, die Saugglocke mit einer Komponentenmontageplatte (8) auf dem Endeffektor zu verbinden; umfassend:
eine Pufferstützstange (9), die einen Kompressionshub zwischen der Saugglocke und der Komponentenmontageplatte durchführen kann, und eine Pufferstützstangenbuchse (10), die einen Kontakthub zwischen der Pufferstützstange und der Komponentenmontageplatte erhöht;
wobei ein L-förmiger Stopper (11) über der Pufferstützstangenbuchse befestigt ist; die Pufferstützstange in vier Löchern auf der Komponentenmontageplatte verteilt ist und die vier Löcher in einer quadratischen oder rechteckigen Form angeordnet sind; der Durchmesser der vier Löcher auf der Komponentenmontageplatte etwas größer als der Durchmesser der Pufferstützstange ist; und eine Erfassungsvorrichtung auf der Komponentenmontageplatte angeordnet ist;
3) eine Wärmeisolierungsabdeckungs-Abstandserfassungseinheit (12), die dazu konfiguriert ist, einen relativen Abstand zwischen der Wärmeisolierungsabdeckung und der Komponentenmontageplatte zu erfassen; umfassend: einen Laserabstandsmesser (12) zum Durchführen einer Erfassung; wobei die Komponentenmontageplatte ein rechteckiges Loch in einem Abstandsüberwachungsbereich des Laserabstandsmessers aufweist, sodass ein Erfassungsstrahl des Laserabstandsmessers direkt unter die Komponentenmontageplatte gerichtet werden kann;
4) eine Endeffektor-Strukturschutzeinheit, die dazu konfiguriert ist, ein Kompressionsausmaß der Pufferstützstange zu erfassen; umfassend: einen photoelektrischen Sensor zum Durchführen einer Erfassung; wobei eine Gruppe von photoelektrischen Sensoren zwei umfasst und die zwei photoelektrischen Sensoren fest zwischen einer Befestigungsklammer und der Komponentenmontageplatte installiert sind; die zwei photoelektrischen Sensoren in einer einzelnen Gruppe nach oben und unten angeordnet sind und fest in Richtung einer Achsenrichtung des Endeffektors installiert sind;
5) eine pneumatische Betätigungseinheit, die dazu konfiguriert ist, eine Flussrichtung des komprimierten Gases innerhalb der Saugglocke zu steuern; umfassend: ein Dreiwege-Solenoidventil (14) mit zwei Positionen und doppelköpfige Verbinder zweier Gruppen, um eine Luftwegsteuerung durchzuführen; wobei ein Lufteinlass des Dreiwege-Solenoidventils mit zwei Positionen mit dem komprimierten Gas verbunden ist und die zwei Luftauslässe jeweils mit den doppelköpfigen Verbindern zweier Gruppen verbunden sind, wobei einer der doppelköpfigen Verbinder zweier Gruppen mit Magnetkrafterzeugungsanschlüssen der vier Saugglocken verbunden ist und der andere doppelköpfige Verbinder zweier Gruppen mit Magnetkraftaufhebungsanschlüssen der vier Saugglocken verbunden ist, um den Zweck zu erfüllen, die Saugglocken durch das Dreiwege-Solenoidventil mit zwei Positionen zu steuern;
6) eine Endeffektor-Schutzabdeckungshülleneinheit, die dazu konfiguriert ist, geschlossenen Schutz für innerhalb des Endeffektors platzierte Komponenten bereitzustellen; umfassend: einen Winkelstahlrahmen (21) zum Verstärken der Rahmenstruktur und eine Dichtungsplatte (22) zum Einschließen der Komponenten am vorderseitigen Ende des Endeffektors und eine SaugglockenSchutzabdeckungshülle (24), um eine direkte Kollision mit der Saugglocke während einer Bewegung zu verhindern; und
7) eine Wärmeableitungseinheit, die dazu konfiguriert ist, Hochtemperatur-Ausstoßgas und Staub außerhalb des Endeffektors zu halten; umfassend: einen Gasverteilungsblock zum Durchführen einer Gasverteilung und eine einziehbare und biegbare Luftrohrdüse, wobei der verbundene Luftweg durch den Gasverteilungsblock (19) abgeleitet beziehungsweise dann mit der Luftrohrdüse verbunden wird, wobei das von der Luftrohrdüse (20) freigegebene komprimierte Gas das freigegebene Hochtemperaturausstoßgas und Staub in der Arbeitsumgebung außerhalb des Endeffektors hält.

2. Endeffektor für einen Torpedowagenabdeckroboter nach Anspruch 1, wobei der Endeffektor weiter ein Wärmeisolierungsabdeckungs-/Tanköffnungssichtsystem umfasst, das zum Identifizieren einer Mittelposition der Wärmeisolierungsabdeckung/Tanköffnung bei der Aufnahmeposition und Rückmelden der Mittelposition an das Robotersystem verwendet wird; umfassend: eine Wärmeisolierungsabdeckungssichtkamera und/oder eine Tanköffnungssichtkamera.

3. Endeffektor für einen Torpedowagenabdeckroboter nach Anspruch 1, wobei die Saugglocke eine permanentmagnetische pneumatische Saugglocke oder eine elektromagnetische Saugglocke ist.

4. Endeffektor für einen Torpedowagenabdeckroboter nach Anspruch 1, wobei die Pufferstützstange und die Saugglocke durch ein Kugelgelenk verbunden und fixiert sind.

5. Endeffektor für einen Torpedowagenabdeckroboter nach Anspruch 1, wobei die Pufferstützstangenbuchse fest zwischen der Komponentenmontageplatte und der Pufferstützstange installiert ist.

6. Endeffektor für einen Torpedowagenabdeckroboter nach Anspruch 1, wobei in der Endeffektor-Strukturschutzeinheit die auf der Komponentenmontageplatte fixierte Erfassungsvorrichtung ein photoelektrischer Sensor ist.

7. Endeffektor für einen Torpedowagenabdeckroboter nach Anspruch 1, wobei die Saugglockenschutzabdeckungshülle in der Endeffektor-Schutzabdeckungshülleneinheit ein niedrigeres Ende aufweist, dessen horizontale Ebene höher als die horizontale Ebene der Bodenfläche der Saugglocke in der äußersten Druckposition ist.

8. Abdeckverfahren des Endeffektors für einen Torpedowagenabdeckroboter nach einem der Ansprüche 1-7, das mindestens die folgenden Schritte umfasst:
1) nachdem sich der Endeffektor zu der Oberseite der Wärmeisolierungsabdeckung bewegt hat, Identifizieren, durch das Wärmeisolierungsabdeckungssichtsystem, der Mitte der Wärmeisolierungsabdeckung bei der aktuellen Aufnahmeposition, und Rückmelden davon an das Robotersystem, und Bewegen der Aufnahmemitte des Endeffektors, damit sich diese direkt über der Mitte der Wärmeisolierungsabdeckung befindet;
2) Antreiben des Robotersystems unter Verwendung der Wertrückmeldung durch die Wärmeabdeckungsabstandserfassungseinheit, um sich mit dem Endeffektor zu senken, und die Wärmeisolierungsabdeckung aufzunehmen, und während dieses Prozesses, falls eine Messungsabweichung des von der Wärmeisolierungsabdeckungs-Abstandserfassungseinheit rückgemeldeten Werts auftritt und den Senkhub veranlasst, zu groß zu sein, wodurch die mechanische Struktur des Endeffektors gefährdet wird, ständiges Überwachen, durch die Endeffektor-Strukturschutzeinheit, eines Kompressionsausmaßes der Puffereinheit, und wenn das Kompressionsausmaß das kritische Kompressionsausmaß erreicht, Aussenden von Informationen und Antreiben des Robotersystems, dass es stoppt sich zu senken und sich anhebt; und,
3) wenn der Endeffektor sich zur Oberseite der Tanköffnung des Torpedowagens bewegt, Identifizieren, durch das Tanköffnungssichtsystem, einer aktuellen Position der Tanköffnung des Torpedowagens, und Rückmelden von Daten an das Robotersystem, und nach Anleiten des Robotersystems, sich zu der Oberseite der Tanköffnung des Torpedowagens zu bewegen, Abschließen eines Abdeckbetriebs, indem die Wärmeisolierungsabdeckung freigegeben wird.

9. Abdeckverfahren des Endeffektors für einen Torpedowagenabdeckroboter nach Anspruch 8, wobei das Abdeckverfahren insbesondere die folgenden Schritte umfasst:
1) nachdem der Endeffektor sich zu der Oberseite der Wärmeisolierungsabdeckung bewegt hat, Aktivieren der Wärmeisolierungsabdeckungssichtkamera und Aufnehmen eines Fotos der Wärmeisolierungsabdeckung und Identifizieren, um eine Mittelposition zu finden; danach Rückmelden, durch die Wärmeisolierungsabdeckungssichtkamera, von Koordinaten der Mittelposition der Wärmeisolierungsabdeckung an das Robotersystem;
2) nachdem das Robotersystem den Endeffektor dahin bewegt hat, sich direkt über der Wärmeisolierungsabdeckung zu befinden, Ausführen, durch die Saugglocke, einer Magnetisierungsanweisung; Starten, durch den Laserentfernungsmesser im Endeffektor, einen aktuellen Abstand zwischen dem Endeffektor und der aufzunehmenden Wärmeisolierungsabdeckung zu messen; danach Ausführen, durch den Endeffektor, einer Senkanweisung gemäß dem Rückmeldungswert; wobei
während dieses Prozesses, falls ein Fehler in dem Rückmeldungswert auftritt, der in einem übermäßigen Senkhub resultiert, die an der Saugglocke installierte Pufferstützstange beginnt, sich zu komprimieren; wenn das Kompressionsausmaß einen voreingestellten Wert erreicht, der an dem oberen Ende der Pufferstützstangenbuchse installierte, L-förmige Stopper das photoelektrische Sensorsignal auslöst, und eine Senkstoppanweisung an das Robotersystem rückgemeldet wird; der Aufnahmebetrieb der Wärmeisolierungsabdeckung standardmäßig abgeschlossen wird und die Wärmeisolierungsabdeckung auf die Prozesspositionshöhe angehoben wird;
in diesem Fall der Laserabstandsmesser erneut misst; da der von dem Laserabstandsmesser rückgemeldete Wert konstant bleibt, nachdem das Aufnehmen erfolgreich war, der Wert verwendet wird, um zu bestimmen, ob der Endeffektor den Aufnahmebetrieb der Wärmeisolierungsabdeckung abgeschlossen hat;
3) Bewegen des Endeffektors, der die Wärmeisolierungsabdeckung aufnimmt, zu der Prozessposition über der Tanköffnung des Torpedowagens; dann Aufnehmen, durch die Tanköffnungssichtkamera, eines Fotos der Tanköffnung des Torpedowagens und Identifizieren, um eine Mittelposition zu finden; dann Rückmelden, durch die Tanköffnungssichtkamera, von Koordinaten der Mittelposition der Tanköffnung des Torpedowagens an das Robotersystem; nachdem das Robotersystem den Endeffektor zu der Abdeckprozessposition über der Tanköffnung des Torpedowagens bewegt hat, Ausführen, durch die Saugglocke, einer Entmagnetisierungsanweisung, sodass die Wärmeisolierungsabdeckung über der Tanköffnung des Torpedowagens freigegeben wird, wodurch der Abdeckbetrieb abgeschlossen wird;
4) während des gesamten Betriebsprozesses, Freigeben, durch die Luftrohrdüse, die mit der Wärmeableitungseinheit verbunden ist, des komprimierten Gases in den Endeffektor, sodass das äußere Hochtemperaturabgas und Staub durch die Löcher oder Spalte nicht in den Endeffektor gelangen können, wodurch die Komponenten geschützt werden.

## Revendications

1. Effecteur terminal (7) pour un robot de sertissage de voiture torpedo, dans lequel l'effecteur terminal comprend :
1) une unité de prélèvement et de libération, configurée pour prélever et libérer un capot d'isolation thermique ; comprenant : une ventouse (4) destinée à prélever et libérer le capot d'isolation thermique, et un tuyau d'air rétractable destiné à fournir du gaz comprimé et une tige de guidage (6) destinée à fixer le tuyau d'air rétractable ; dans lequel le tuyau d'air rétractable est monté dans la tige de guidage, de sorte que le tuyau d'air rétractable ne puisse se déplacer que dans un sens axial de la tige de guidage ;
2) une unité de tampon, configurée pour raccorder la ventouse à une plaque de montage de composant (8) sur l'effecteur terminal ; comprenant : une tige de support de tampon (9) qui peut réaliser une course de compression entre la ventouse et la plaque de montage de composant et une douille de tige de support de tampon (10) qui augmente une course de contact entre la tige de support de tampon et la plaque de montage de composant ;
dans lequel une butée en forme de L (11) est fixée au-dessus de la douille de tige de support de tampon ; la tige de support de tampon est répartie dans quatre trous sur la plaque de montage de composant, et les quatre trous sont agencés sous une forme carrée ou rectangulaire ; le diamètre des quatre trous sur la plaque de montage de composant est légèrement plus grand que le diamètre de la tige de support de tampon ; et un dispositif de détection est agencé sur la plaque de montage de composant ;
3) une unité de détection de distance de capot d'isolation thermique (12), configurée pour détecter une distance relative entre le capot d'isolation thermique et la plaque de montage de composant ; comprenant : un télémètre laser (12) destiné à réaliser une détection ; dans lequel la plaque de montage de composant présente un trou rectangulaire dans une zone de surveillance de distance du télémètre laser, de sorte qu'un faisceau de détection du télémètre laser puisse être dirigé directement sous la plaque de montage de composant ;
4) une unité de protection de structure d'effecteur terminal, configurée pour détecter une quantité de compression de la tige de support de tampon ; comprenant : un capteur photoélectrique destiné à réaliser une détection ; dans lequel un groupe de capteurs photoélectriques en comprend deux, et les deux capteurs photoélectriques sont installés de manière fixe entre un support de fixation et la plaque de montage de composant ; les deux capteurs photoélectriques d'un seul groupe sont agencés vers le haut et vers le bas, et sont installés de manière fixe dans une direction d'axe de l'effecteur terminal ;
5) une unité d'actionneur pneumatique, configurée pour commander un sens d'écoulement du gaz comprimé à l'intérieur de la ventouse ; comprenant : une électrovanne à trois voies à deux positions (14) et des raccords à deux groupes à double tête destinés à réaliser une commande de trajet d'air ; dans lequel une entrée d'air de l'électrovanne à trois voies à deux positions est raccordée au gaz comprimé, et les deux sorties d'air sont respectivement raccordées aux raccords à deux groupes à double tête, l'un des raccords à deux groupes à double tête est raccordé à des orifices de génération de force magnétique des quatre ventouses, et l'autre raccord à deux groupes à double tête est raccordé à des orifices d'élimination de force magnétique des quatre ventouses, de manière à atteindre le but consistant à commander les ventouses par l'intermédiaire de l'électrovanne à trois voies à deux positions ;
6) une unité de coque de capot de protection d'effecteur terminal, configurée pour fournir une protection fermée pour des composants montés à l'intérieur de l'effecteur terminal ; comprenant : un cadre en acier d'angle (21) destiné à renforcer la structure de cadre et une plaque d'étanchéité (22) destinée à enfermer les composants sur l'extrémité avant de l'effecteur terminal, et une coque de capot de protection de ventouse (24) pour empêcher une collision directe avec la ventouse pendant le mouvement ; et
7) une unité de dissipation de chaleur, configurée pour bloquer un gaz d'échappement à haute température et la poussière pour qu'ils soient à l'extérieur de l'effecteur terminal ; comprenant : un bloc de distribution de gaz destiné à réaliser la distribution de gaz et une buse de tuyau d'air rétractable et pliable, dans lequel le trajet d'air raccordé est dispersé à travers le bloc de distribution de gaz (19) et ensuite raccordé respectivement à la buse de tuyau d'air, le gaz comprimé libéré par la buse de tuyau d'air (20) bloque le gaz d'échappement à haute température et la poussière dans l'environnement de travail pour qu'ils soient à l'extérieur de l'effecteur terminal.

2. Effecteur terminal pour un robot de sertissage de voiture torpedo selon la revendication 1, dans lequel l'effecteur terminal comprend en outre un système visuel d'ouverture de réservoir/capot d'isolation thermique utilisé pour identifier une position centrale de l'ouverture de réservoir/du capot d'isolation thermique à la position de prélèvement, et retourner la position centrale au système robotisé ; comprenant : une caméra visuelle de capot d'isolation thermique et/ou une caméra visuelle d'ouverture de réservoir.

3. Effecteur terminal pour un robot de sertissage de voiture torpedo selon la revendication 1, dans lequel la ventouse est une ventouse pneumatique magnétique permanente ou une ventouse électromagnétique.

4. Effecteur terminal pour un robot de sertissage de voiture torpedo selon la revendication 1, dans lequel la tige de support de tampon et la ventouse sont raccordées et fixées par un joint à rotule.

5. Effecteur terminal pour un robot de sertissage de voiture torpedo selon la revendication 1, dans lequel la douille de tige de support de tampon est installée de manière fixe entre la plaque de montage de composant et la tige de support de tampon.

6. Effecteur terminal pour un robot de sertissage de voiture torpedo selon la revendication 1, dans lequel, dans l'unité de protection de structure d'effecteur terminal, le dispositif de détection fixé sur la plaque de montage de composant est un capteur photoélectrique.

7. Effecteur terminal pour un robot de sertissage de voiture torpedo selon la revendication 1, dans lequel la coque de capot de protection de ventouse dans l'unité de coque de capot de protection d'effecteur terminal présente une extrémité inférieure dont le plan horizontal est plus haut que le plan horizontal de la surface inférieure de la ventouse dans la position de pression extrême.

8. Procédé de sertissage de l'effecteur terminal pour un robot de sertissage de voiture torpedo selon l'une des revendications 1 à 7, comprenant au moins les étapes suivantes :
1) après que l'effecteur terminal se déplace vers le haut du capot d'isolation thermique, l'identification, par le système visuel du capot d'isolation thermique, du centre du capot d'isolation thermique à la position de prélèvement actuelle, et le retour au système robotisé, et le déplacement du centre de prélèvement de l'effecteur terminal pour qu'il soit directement au-dessus du centre du capot d'isolation thermique ;
2) l'entraînement du système robotisé en utilisant la valeur retournée par l'unité de détection de distance de capot d'isolation thermique pour descendre avec l'effecteur terminal et prélever le capot d'isolation thermique, et dans ce processus, si un écart de mesure de la valeur retournée par l'unité de détection de distance de capot d'isolation thermique se produit et provoque une course de descente trop importante, mettant ainsi en danger la structure mécanique de l'effecteur terminal, la surveillance, par l'unité de protection de structure d'effecteur terminal, d'une quantité de compression de l'unité de tampon à tout moment, et lorsque la quantité de compression atteint la quantité de compression critique, l'envoi d'informations et l'entraînement du système robotisé pour arrêter la descente et le levage vers le haut ; et
3) lorsque l'effecteur terminal se déplace vers le sommet de l'ouverture de réservoir de la voiture torpedo, l'identification, par le système visuel d'ouverture de réservoir, d'une position actuelle de l'ouverture de réservoir de la voiture torpedo, et le retour de données au système robotisé, et après avoir guidé le système robotisé pour son déplacement vers le sommet de l'ouverture de réservoir de la voiture torpedo, la fin d'une opération de sertissage en libérant le capot d'isolation thermique.

9. Procédé de sertissage de l'effecteur terminal pour un robot de sertissage de voiture torpedo selon la revendication 8, dans lequel le procédé de sertissage comprend spécifiquement les étapes suivantes :
1) après que l'effecteur terminal se déplace vers le sommet du capot d'isolation thermique, l'activation de la caméra visuelle du capot d'isolation thermique, et la prise d'une photo du capot d'isolation thermique et l'identification pour trouver une position centrale ; ensuite, le retour, par la caméra visuelle du capot d'isolation thermique, de coordonnées de la position centrale du capot d'isolation thermique au système robotisé ;
2) après que le système robotisé déplace l'effecteur terminal pour qu'il soit directement au-dessus du capot d'isolation thermique, l'exécution, par la ventouse, d'une instruction de magnétisation ; le démarrage de la mesure, par le télémètre laser dans l'effecteur terminal, d'une distance actuelle entre l'effecteur terminal et le capot d'isolation thermique pour son prélèvement ; ensuite, l'exécution, par l'effecteur terminal, d'une instruction décroissante selon la valeur de retour ; dans lequel
au cours de ce processus, si une erreur se produit dans la valeur de retour, entraînant une course de descente excessive, la tige de support de tampon installée sur la ventouse commence à se comprimer ; lorsque la quantité de compression atteint une valeur prédéfinie, la butée en forme de L installée sur l'extrémité supérieure de la douille de tige de support de tampon déclenche le signal de capteur photoélectrique, et une instruction d'arrêt de descente est retournée au système robotisé ; l'opération de prélèvement du capot d'isolation thermique est terminée par défaut, et le capot d'isolation thermique est soulevé à la hauteur de la position de processus ;
dans ce cas, le télémètre laser mesure à nouveau ; puisque la valeur retournée par le télémètre laser reste constante après le prélèvement réussi, la valeur est utilisée pour déterminer si l'effecteur terminal a terminé l'opération de prélèvement du capot d'isolation thermique ;
3) le déplacement de l'effecteur terminal qui prélève le capot d'isolation thermique vers la position de processus au-dessus de l'ouverture de réservoir de la voiture torpedo ; puis, la prise, par la caméra visuelle d'ouverture de réservoir, d'une photo de l'ouverture de réservoir de la voiture torpedo et l'identification pour trouver une position centrale ; puis, le retour, par la caméra visuelle d'ouverture de réservoir, de coordonnées de la position centrale de l'ouverture de réservoir de la voiture torpedo au système robotisé ; après que le système robotisé déplace l'effecteur terminal vers la position de processus de sertissage au-dessus de l'ouverture de réservoir de la voiture torpedo, l'exécution, par la ventouse, d'une instruction de démagnétisation, de sorte que le capot d'isolation thermique soit libéré au-dessus de l'ouverture de réservoir de la voiture torpedo, terminant ainsi l'opération de sertissage ;
4) pendant tout le processus de fonctionnement, la libération, par la buse de tuyau d'air raccordée à l'unité de dissipation de chaleur, du gaz comprimé dans l'effecteur terminal, de sorte que le gaz d'échappement externe à haute température et la poussière ne puissent pas pénétrer dans l'effecteur terminal à travers les trous ou les espaces, ce qui permet de protéger les composants.
